# EUROPÄISCHE PATENTSCHRIFT

(11) **EP 2 217 353 B1**
(45) Veröffentlichungstag und Bekanntmachung des Hinweises auf die Patenterteilung: **25.01.2017**
(21) Anmeldenummer: 08849690.6
(22) Anmeldetag: 14.11.2008
(51) Int. Cl.: B01D 53/14, B01D 53/62

(54) **VERFAHREN ZUM ENTFERNEN VON KOHLENDIOXID AUS FLUIDSTRÖMEN, INSBESONDERE VERBRENNUNGSABGASEN**
METHOD FOR REMOVING CARBON DIOXIDE FROM FLUID FLOWS, IN PARTICULAR COMBUSTION EXHAUST GASES
PROCÉDÉ POUR ÉLIMINER DU DIOXYDE DE CARBONE DE COURANTS DE FLUIDES, EN PARTICULIER DE GAZ DE COMBUSTION

(30) Priorität: 15.11.2007 EP 07120820
(43) Veröffentlichungstag der Anmeldung: 18.08.2010
(73) Patentinhaber: BASF SE, 67056 Ludwigshafen am Rhein (DE)
(72) Erfinder: ASPRION, Norbert, 67063 Ludwigshafen (DE); SIEDER, Georg, 67098 Bad Dürkheim (DE); LICHTFERS, Ute, 76187 Karlsruhe (DE); GARCIA ANDARCIA, Hugo Rafael, 68161 Mannheim (DE)
(86) Internationale Anmeldenummer: PCT/EP2008/065538
(87) Internationale Veröffentlichungsnummer: WO 2009/063041

(56) Entgegenhaltungen:
- EP-A- 0 279 667
- WO-A-2006/022885
- WO-A-2007/104800
- GB-A- 786 669
- US-A- 4 278 646
- US-A- 4 400 368

## Beschreibung

Die vorliegend Erfindung betrifft ein Verfahren zum Entfernen von Kohlendioxid aus einem Fluidstrom, insbesondere aus Verbrennungsabgasen bzw. Rauchgasen.

Die Entfernung von Sauergasen, wie z.B. CO₂, H₂S, SO₂, CS₂, HCN, COS oder Merkaptanen, aus Fluidströmen, wie Erdgas, Raffineriegas, Synthesegas, ist aus unterschiedlichen Gründen von Bedeutung. Kohlendioxid muss beispielsweise aus Erdgas entfernt werden, da eine hohe Konzentration an CO₂ den Brennwert des Gases reduziert. Außerdem kann CO₂ in Verbindung mit Feuchtigkeit, die in den Fluidströmen häufig mitgeführt wird, zu Korrosion an Leitungen und Armaturen führen. Der Gehalt an Schwefelverbindungen von Erdgas muss durch geeignete Aufbereitungsmaßnahmen unmittelbar an der Erdgasquelle reduziert werden, denn auch die Schwefelverbindungen bilden in dem vom Erdgas häufig mitgeführten Wasser Säuren, die korrosiv wirken. Für den Transport des Erdgases in einer Pipeline müssen daher vorgegebene Grenzwerte der schwefelhaltigen Verunreinigungen eingehalten werden. Darüber hinaus sind zahlreiche Schwefelverbindungen bereits in niedrigen Konzentrationen übel riechend und, vor allem Schwefeldioxid, toxisch.

Die Entfernung von Kohlendioxid aus Verbrennungsabgasen bzw. Rauchgasen ist aus verschiedenen Gründen wünschenswert, insbesondere aber zur Verminderung der Emission von Kohlendioxid, die als Hauptursache für den so genannten Treibhauseffekt angesehen wird.

Vielfach wird das freigesetzte Kohlendioxid anschließend verdichtet und z. B. einem Drucktank oder einer Sequestrierung zugeführt. Hierzu ist es vorteilhaft, die Regeneration des Absorptionsmittels bei einem höheren Druck durchzuführen. Das Kohlendioxid fällt auf diese Weise auf einem höheren Druckniveau an. Die Druckdifferenz zum Druckniveau des Drucktanks ist geringer und man kann unter Umständen eine Kompressionsstufe einsparen. Ein höherer Druck bei der Regeneration bedingt eine höhere Regenerationstemperatur. Die Regenerationstemperatur ist durch die thermische Stabilität des Absorptionsmittels begrenzt. Wässrige ammoniakalische Lösungen zeichnen sich durch hohe thermische Stabilität aus.

Aus der WO 2006/022885 ist ein Verfahren zur Reinigung von Verbrennungsabgasen, einschließlich der Entfernung von CO₂, bekannt. Das Verbrennungsabgas wir durch direkten Kontakt mit kaltem Wasser gekühlt. CO₂ wird durch Wäsche mit einer ammoniakalischen Lösung oder Aufschlämmung entfernt. Die beladene Lösung wird durch Erhöhen des Drucks und der Temperatur regeneriert.

Rauchgase weisen sehr geringe Kohlendioxid-Partialdrücke auf, da sie in der Regel bei einem Druck nahe dem Atmosphärendruck anfallen und typischerweise 3 bis 15 Vol.-% Kohlendioxid enthalten. Um eine wirksame Entfernung von Kohlendioxid zu erreichen, muss das Absorptionsmittel eine hohe Kohlendioxid-Affinität aufweisen. Die hohe Kohlendioxid-Affinität bedingt andererseits, dass bei der Regeneration des Absorptionsmittels das Kohlendioxid in der Regel nicht vollständig ausgetrieben wird und das regenerierte Absorptionsmittel eine Kohlendioxid-Restbeladung aufweist. Als Kreisiaufkapazität steht nur die Differenz zwischen der maximalen Beladbarkeit des Absorptionsmittels und der Restbeladung des regenerierten Absorptionsmittels zur Verfügung.

Der Erfindung liegt die Aufgabe zu Grunde, ein Verfahren anzugeben, das eine weitgehende Entfernung von Kohlendioxid aus Fluidströmen und eine Regeneration des Absorptionsmittels bei hohem Druck gestattet und das sich eines Absorptionsmittels mit hoher Kreislaufkapazität bedient.

Die Aufgabe wird gelöst durch ein Verfahren zum Entfernen von Kohlendioxid aus einem Fluidstrom, bei dem man
a) den Fluidstrom mit einem Absorptionsmittel in Kontakt bringt, das eine Lösung von Ammoniak und wenigstens einer Aminocarbonsäure und/oder Aminosulfonsäure enthält, wobei das Absorptionsmittel eine Ammoniak-Konzentration von 1 bis 12 mol/l und ein molares Verhältnis von Ammoniak : Aminocarbonsäure und/oder Aminosulfonsäure von 0,5 bis 6 aufweist, wobei man ein beladenes Absorptionsmittel erhält, und
b) das beladene Absorptionsmittel unter Freisetzen von Kohlendioxid bei einem Druck von 5 bis 50 bar (absoluter Druck) regeneriert.

Vorzugsweise kühlt man den Fluidstrom vor dem Inkontaktbringen mit dem Absorptionsmittel ab, vorzugsweise auf eine Temperatur von 0 bis 20 °C, insbesondere 2 bis 10 °C.

Das Abkühlen (Quenchen) des Fluidstrom kann durch indirekten Wärmetausch erfolgen, erfolgt aber vorzugsweise durch direkten Kontakt mit einer wässrigen Waschflüssigkeit, insbesondere Wasser oder Kondensat. Die Waschflüssigkeit kann alkalische Substanzen, wie Natrium- oder Ammoniumcarbonat, enthalten; dies ist in der Regel aber nicht bevorzugt.

Zum Inkontaktbringen des Fluidstroms eignen sich besonders übliche Nasswäscher oder Gaswäscher, bei denen die Waschflüssigkeit im Gleichstrom oder vorzugsweise im Gegenstrom mit dem Fluidstrom in Kontakt gebracht wird. Die Waschflüssigkeit wird vorzugsweise im Kreis gefahren und z. B. über einen Wärmetauscher umgepumpt. Das kontinuierliche Ausleiten eines Teilstroms verhindert die Akkumulation von Verunreinigungen.

Das Kühlen des Fluidstroms kann in einer oder mehreren Stufen, z. B. hintereinander geschalteten Wäschern, erfolgen.

Durch diese Behandlung wird Wasserdampf aus dem Fluidstrom auskondensiert, partikuläre Bestandteile des Fluidstroms werden niedergeschlagen und wasserlösliche Verunreinigungen des Fluidstroms, wie Schwefeloxide, werden zumindest teilweise ausgewaschen.

Der Fluidstrom, der gegebenenfalls wie beschrieben vorbehandelt wurde, wird in wenigstens einer Absorptionsstufe mit dem Absorptionsmittel in Kontakt gebracht, vorzugsweise bei einer Temperatur von 0 bis 20 °C, insbesondere 2 bis 10 °C. Je tiefer die Temperatur, desto mehr Kohlendioxid kann das Absorptionsmittel aufnehmen. Die tiefe Temperatur verringert auch den Dampfdruck des Ammoniaks und verhindert so weitgehend dessen Ausdampfen in den behandelten Fluidstrom. Man kann eine oder mehrere Absorptionsstufen verwenden.

Zur Durchführung der Kohlendioxid-Absorption geeignete Vorrichtungen umfassen Waschkolonnen, z. B. Füllkörper, Packungs- und Bodenkolonnen, und/oder andere Absorber wie Membrankontaktoren, Radialstromwäscher, Strahlwäscher, Venturi-Wäscher und Rotations-Sprühwäscher. Die Behandlung des Gasstroms mit dem Absorptionsmittel erfolgt dabei bevorzugt in einer Waschkolonne im Gegenstrom. Der Gasstrom wird dabei im Allgemeinen in den unteren Bereich und das Absorptionsmittel in den oberen Bereich der Kolonne eingespeist.

Das Verfahren eignet sich besonders für Fluidströme, die bei einem Druck am oder nahe beim Umgebungsdruck anfallen. Sie werden vorzugsweise bei dem Druck, bei dem sie anfallen, mit dem Absorptionsmittel in Kontakt gebracht, z. B. bei einem Druck von 0,9 bis 3 bar (absoluter Druck), vorzugsweise 1 bis 1,5 bar.

Das beladene Absorptionsmittel wird durch Erwärmen, vorzugsweise bei einer Temperatur von 50 bis 200 °C, insbesondere 90 bis 140 °C, regeneriert. Die Regeneration erfolgt bei einem Druck von 5 bis 50 bar (absoluter Druck), vorzugsweise 10 bis 30 bar.

Das regenerierte Absorptionsmittel wird in die Absorptionsstufe zurückgeführt. Bevor das regenerierte Absorptionsmittel wieder in den Absorber eingeführt wird, wird es auf eine geeignete Absorptionstemperatur abgekühlt. Um die im heißen regenerierten Absorptionsmittel enthaltene Energie auszunutzen, ist es bevorzugt, das beladene Absorptionsmittel aus dem Absorber durch Wärmetausch mit dem heißen regenerierten Absorptionsmittel vorzuwärmen. Durch den Wärmetausch wird das beladene Absorptionsmittel auf eine höhere Temperatur gebracht, so dass im Regenerationsschritt ein geringerer Energieeinsatz erforderlich ist.

Das bei der Regeneration mit hohem Druck freigesetzte Kohlendioxid enthält geringe Menge an Wasserdampf und Ammoniak, die durch Auskondensieren und/oder Wäschen entfernt werden können.

Das im erfindungsgemäßen Verfahren eingesetzte Absorptionsmittel enthält Ammoniak und wenigstens eine Aminocarbonsäure und/oder Aminosulfonsäure. Das molare Verhältnis von Ammoniak : Aminocarbonsäure und/oder Aminosulfonsäure beträgt 0,5 bis 6, vorzugsweise 0,8 bis 2.

Das Absorptionsmittel weist eine Ammoniak-Konzentration (als freies NH₃ oder NH₄⁺-Gegenkation zu Aminocarbonsäure- und/oder Aminosulfonsäureanionen) von 1 bis 12 mol/l, insbesondere 3 bis 6 mol/l, auf.

Das regenerierte Absorptionsmittel weist vorzugsweise ein molares Verhältnis von Ammoniak: Kohlendioxid von mehr als 1,5 auf; das beladene Absorptionsmittel weist vorzugsweise ein molares Verhältnis von Ammoniak : Kohlendioxid von 1,0 bis 2,0 auf.

Die Aminocarbonsäure und/oder Aminosulfonsäure liegt in der wässrigen Lösung in freier Form (d. h. zwitterionischer Form) und/oder als Ammoniumsalz vor. Die wässrige Lösung enthält vorzugsweise im Wesentlichen kein Metallsalz der Aminocarbonsäure bzw. Aminosulfonsäure.

Die wässrige Lösung ist vorzugsweise von anorganischen basischen Salzen im Wesentlichen frei, d. h. sie enthält vorzugsweise weniger als etwa 10 Gew.-%, insbesondere weniger als etwa 5 Gew.-% anorganische basische Salze. Anorganische basische Salze sind beispielsweise Alkalimetall- oder Erdalkalimetallcarbonate oder -hydrogencarbonate, wie insbesondere Kaliumcarbonat (Pottasche).

Die Erhöhung der Kreislaufabsorptionskapazität durch Mitverwendung einer Aminocarbonsäure bzw. Aminosulfonsäure beruht vermutlich auf folgenden Zusammenhängen: Aminosäuren sind amphotere Verbindungen. Ihre Säurestärke (ausgedrückt durch den pKs-Wert) ist temperaturabhängig, wobei die Aminosäuren bei höheren Temperaturen stärker sauer wirken als bei niedrigeren Temperaturen. Da die Regeneration des Absorptionsmittels üblicherweise bei höherer Temperatur stattfindet als die CO₂-Ab-sorption, unterstützt der stärker saure Charakter der Aminosäure die CO₂-Freisetzung aus dem beladenen Absorptionsmittel, wodurch der zur Regeneration erforderliche Energiebedarf verringert wird. Bei niedrigeren Temperaturen verhalten sich die Aminosäuren neutral oder nur schwach sauer, so dass die Absorptionskapazität bei niedrigeren Temperaturen nicht oder nur wenig beeinflusst wird.

Aminocarbonsäuren enthalten wenigstens eine Aminogruppe und wenigstens eine Carboxylgruppe in ihrer Molekülstruktur. Entsprechend enthalten Aminosulfonsäuren wenigstens eine Aminogruppe und wenigstens eine Sulfonsäuregruppe in ihrer Molekülstruktur. Das Stickstoffatom der Aminogruppe kann unsubstituiert oder einfach oder zweifach substituiert sein, z. B. durch C₁-C₄-Alkyl- oder Hydroxy-C₂-C₄-alkylgruppen. Geeignete Aminocarbonsäuren enthalten üblicherweise 2 bis 12 Kohlenstoffatome, z. B. 4 bis 12 Kohlenstoffatome; geeignete Aminosulfonsäuren 1 bis 6 Kohlenstoffatome.

### Geeignete Aminocarbonsäuren sind beispielsweise

α-Aminosäuren, wie Glycin (Aminoessigsäure), N-Methylglycin (N-Methylaminoessigsäure, Sarkosin), N,N-Dimethylglycin (Dimethylaminoessigsäure), N-Ethylglycin, N,N-Diethylglycin, N,N-Bis(2-hydroxyethyl)glycin (BICINE), Alanin (2-Aminopropionsäure), N-Methylalanin (2-(Methylamino)-propionsäure), N,N-Dimethylalanin, N-Ethylalanin, 2-Methylalanin (2-Aminoisobuttersäure), Leucin (2-Amino-4-methyl-pentan-1-säure), N-Methylleucin, N,N-Dimethylleucin, Isoleucin (2-Amino-3-methylpentansäure), N-Methyl-isoleucin, N,N-Dimethylisoleucin, Valin (2-Aminoisovaleriansäure), α-Methylvalin (2-Amino-2-methylisovaleriansäure), N-Methylvalin (2-Methylaminoisovaleriansäure), N,N-Dimethylvalin, Prolin (Pyrrolidin-2-carbonsäure), N-Methylprolin, Serin (2-Amino-3-hydroxy-propan-1-säure), N-Methylserin, N,N-Dimethylserin, 2-(Methylamino)-isobuttersäure, Piperidin-2-carbonsäure, N-Methyl-piperidin-2-carbonsäure, β-Aminosäuren, wie 3-Aminopropionsäure (β-Alanin), 3-Methylaminopropionsäure, 3-Dimethylaminopropionsäure, Iminodipropionsäure, N-Methyliminodipropionsäure, Piperidin-3-carbonsäure, N-Methyl-piperidin-3-carbonsäure,
oder Aminocarbonsäuren wie Piperidin-4-carbonsäure, N-Methyl-piperidin-4-carbonsäure, 4-Aminobuttersäure, 4-Methylaminobuttersäure, 4-Dimethylaminobuttersäure, 6-Aminohexansäure.

### Geeignete Aminosulfonsäuren sind beispielsweise

Aminomethansulfonsäure, Taurin (2-Aminoethansulfonsäure), N-Methyltaurin (2-(Methylamino)ethansulfonsäure).

Wenn die Aminocarbonsäure oder Aminosulfonsäure ein oder mehrere chirale Kohlenstoffatome aufweist, ist die Konfiguration unbeachtlich; es können sowohl die reinen Enantiomere/Diastereomere als auch beliebige Gemische oder Racemate verwendet werden.

Die Aminocarbonsäure ist vorzugsweise eine α-Aminosäure oder eine β-Aminosäure. Die Aminosulfonsäure ist vorzugsweise eine α-Aminosulfonsäure oder eine β-Amino-sulfonsäure. Davon sind α-Aminosäure und β-Aminosulfonsäure besonders bevorzugt. Die Bezeichnung "α" bzw. "β" bedeutet in Übereinstimmung mit der üblichen Nomenklatur, dass die Aminogruppe durch ein bzw. zwei Kohlenstoffatome von der Carboxyl- oder Sulfonsäuregruppe getrennt ist.

Besonders eignen sich N-Mono-C₁-C₄-alkyl-aminocarbonsäuren und N,N-Di-C₁-C₄-alkyl-aminocarbonsäuren, insbesondere N-Mono-C₁-C₄-alkyl-α-aminocarbonsäuren und N,N-Di-C₁-C₄-alkyl-α-aminocarbonsäuren. Hierzu zählen beispielsweise N,N-Dimethylglycin oder N-Methylalanin.

Besonders geeignet sind außerdem α-Aminosäuren, worin das α-Kohlenstoffatom nur von Wasserstoff verschiedene Substituenten trägt, wie z. B. 2-Aminoisobuttersäure.

Das Absorptionsmittel ist vorzugsweise eine wässrige Lösung. Das Absorptionsmittel kann zusätzlich Lösungsmittel enthalten, die z. B. ausgewählt sind unter Cyclotetramethylensulfon (Sulfolan) und dessen Derivaten, aliphatischen Säureamiden (Acetylmorpholin, N-Formylmorpholin), N-alkylierten Pyrrolidonen und entsprechenden Piperidonen, wie N-Methylpyrrolidon (NMP), Propylencarbonat, Methanol, Dialkylethern von Polyethylenglykolen und Gemischen davon.

Das Absorptionsmittel kann weitere funktionelle Bestandteile enthalten, wie Korrosionsinhibitoren.

Sofern vorhanden, werden beim erfindungsgemäßen Verfahren neben Kohlendioxid üblicherweise auch andere Sauergase, wie z. B. H₂S, SO₂, CS₂, HCN, COS, NO₂, HCl, Disulfide oder Mercaptane, aus dem Gasstrom entfernt.

Das erfindungsgemäße Verfahren bzw. Absorptionsmittel ist geeignet zur Behandlung von Fluiden, insbesondere Gasströmen aller Art. Fluide, welche die sauren Gase enthalten, sind einerseits Gase, wie Erdgas, Synthesegas, Koksofengas, Kohlevergasungsgas, Kreisgas, Deponiegase und Verbrennungsgase, und andererseits mit dem Absorptionsmittel im Wesentlichen nicht mischbare Flüssigkeiten, wie LPG (Liquefied Petroleum Gas) oder NGL (Natural Gas Liquids). Das erfindungsgemäße Verfahren bzw. Absorptionsmittel ist zur Behandlung von kohlenwasserstoffhaltigen Fluidströmen geeignet. Die enthaltenen Kohlenwasserstoffe sind z. B. aliphatische Kohlenwasserstoffe, wie C₁-C₄-Kohlenwasserstoffe, wie Methan, oder aromatische Kohlenwasserstoffe wie Benzol, Toluol oder Xylol.

Bei dem Gasstrom kann es sich auch um einen Gasstrom handeln, der auf folgende Weise gebildet wird:
a) Oxidation organischer Substanzen, z. B. Rauchgase (flue gas),
b) Kompostierung und Lagerung organische Substanzen enthaltender Abfallstoffe, oder
c) bakterielle Zersetzung organischer Substanzen.

Die Oxidation kann unter Flammenerscheinung, d. h. als herkömmliche Verbrennung, oder als Oxidation ohne Flammenerscheinung, z. B. in Form einer katalytischen Oxidation oder Partialoxidation, durchgeführt werden. Organische Substanzen, die der Verbrennung unterworfen werden, sind üblicherweise fossile Brennstoffe wie Kohle, Erdgas, Erdöl, Benzin, Diesel, Raffinate oder Kerosin, Biodiesel oder Abfallstoffe mit einem Gehalt an organischen Substanzen. Ausgangsstoffe der katalytischen (Partial-) Oxidation sind z. B. Methanol oder Methan, das zu Ameisensäure oder Formaldehyd umgesetzt werden kann.

Abfallstoffe, die der Oxidation, der Kompostierung oder Lagerung unterzogen werden, sind typischerweise Hausmüll, Kunststoffabfälle oder Verpackungsmüll.

Die Verbrennung der organischen Substanzen erfolgt meistens in üblichen Verbrennungsanlagen mit Luft. Die Kompostierung und Lagerung organischer Substanzen enthaltender Abfallstoffe erfolgt im Allgemeinen auf Mülldeponien. Das Abgas bzw. die Abluft derartiger Anlagen kann vorteilhaft nach dem erfindungsgemäßen Verfahren behandelt werden.

Als organische Substanzen für bakterielle Zersetzung werden üblicherweise Stalldung, Stroh, Jauche, Klärschlamm, Fermentationsrückstände und dergleichen verwendet.
Die bakterielle Zersetzung erfolgt z. B. in üblichen Biogasanlagen. Die Abluft derartiger Anlagen kann vorteilhaft nach dem erfindungsgemäßen Verfahren behandelt werden.

Das Verfahren eignet sich auch zur Behandlung der Abgase von Brennstoffzellen oder chemischer Syntheseanlagen, die sich einer (Partial-) Oxidation organischer Substanzen bedienen.

Daneben kann das erfindungsgemäße Verfahren natürlich auch angewendet werden, um unverbrannte fossile Gase, wie Erdgas, z. B. so genannte Coal-seam-Gase, d. h. bei der Förderung von Kohle anfallende Gase; die gesammelt und komprimiert werden, zu behandeln.

Die Erfindung wird anhand der beigefügten Figuren und der nachstehenden Beispiele näher erläutert.
Fig. 1 zeigt die Gleichgewichtsbeladung in Abhängigkeit vom Druck einer wässrigen Ammoniaklösung (Vergleich) und einer wässrigen Lösung von Ammoniak und Dimethylglycin (erfindungsgemäß) bei 10 °C und 120 °C.
Figur 2 zeigt schematisch eine Vorrichtung zur Durchführung des erfindungsgemäßen Verfahrens, wie sie zur erfindungsgemäßen Behandlung eines Rauchgases geeignet ist.

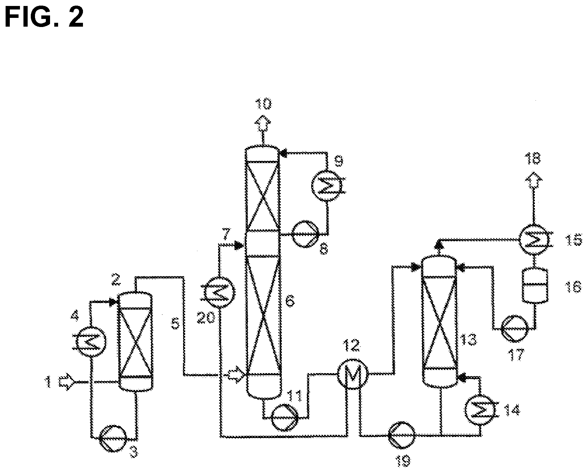

Gemäß Fig. 2 wird über eine Zuleitung 1 ein Kohlendioxid enthaltendes Rauchgas in den Gaswäscher 2 eingeführt und dort in direktem Kontakt mit Quenchwasser, das über die Pumpe 3 und den Wärmetauscher 4 umgepumpt wird, gekühlt. Ober die Leitung 5 wird das gekühlte Rauchgas in einen Absorber 6 eingeführt und im Gegenstrom mit dem regenerierten Absorptionsmittel, das über die Absorptionsmittelleitung 7 herangeführt wird, in Kontakt gebracht. Das Absorptionsmittel entfernt Kohlendioxid durch Absorption aus dem Gas. Im oberen Teil des Absorbers 6 ist eine aus Einbauten wie strukturierten Packungen, Füllkörpern oder Böden, der Pumpe 8 und dem Wärmetauscher 9 bestehende Rückwaschsektion vorgesehen. Wasser oder Kondensat wird über die Pumpe 8 und den Wärmetauscher 9 recycliert, um mitgeführten Ammoniak aus dem behandelten Gasstrom herauszuwaschen; an der Abgasleitung 10 fällt ein an Kohlendioxid armes behandeltes Gas an.

Über eine Pumpe 11, einen Wärmetauscher 12, in dem das mit beladene Absorptionsmittel mit der Wärme des aus dem Sumpf der Desorptionskolonne 13 austretenden, regenerierten Absorptionsmittels aufgeheizt wird, wird das mit Kohlendioxid beladene Absorptionsmittel einer Desorptionskolonne 13 zugeleitet. Im unteren Teil der Desorptionskolonne 13 wird das beladene Absorptionsmittel mittels eines Aufheizers 14 erwärmt und regeneriert. Das dabei freigesetzte Kohlendioxid verlässt die Desorptionskolonne 13 über die Abgasleitung 18. In der Leitung 18 ist ein Kondensator 15 mit Rücklaufbehälter 16 vorgesehen, um mitgeführte Absorptionsmitteldämpfe auszukondensieren. Das regenerierte Absorptionsmittel wird anschließend mittels einer Pumpe 19 über den Wärmetauscher 12, in dem das regenerierte Absorptionsmittel das beladene Absorptionsmittel aufheizt und selbst dabei abkühlt, und einen Wärmetauscher 20 der Absorptionskolonne 6 wieder zugeführt.

### Beispiel 1 (Vergleich): CO₂-Aufnahmekapazität einer wässrigen Ammoniaklösung

Der typische CO₂-Gehalt des Rauchgases eines Kohlekraftwerkes beträgt etwa 14 Vol.-%. Es wird angenommen, dass die Absorption bei 10 °C und einem Gesamtdruck von 1 bar erfolgt, entsprechend einem Cα₂-Partialdruck von etwa 0,14 bar. Für die Regeneration wird angenommen, dass im Desorbersumpf ein Gesamtdruck von 10 bar und eine Temperatur von 120 °C vorliegt.

Man führte Gleichgewichtsmessungen bei 10 °C und 120°C in einem Glas-Druckgefäß (Volumen etwa 100 cm³) durch. In dem Gefäß wurde eine bestimmte Menge Wasser vorgelegt, das durch Anlegen eines Vakuums entgast wurde. Nach dem Evakuieren gab man eine definierte Menge Ammoniak zu, so dass man eine Lösung mit 5,3 % Ammoniak erhielt. Nach Einstellen der Temperatur auf 10 °C wurde Kohlendioxid stufenweise über ein definiertes Gasvolumen zudosiert. Nach Einstellen des Gleichgewichts bestimmte man den Gesamtdruck in dem Gefäß.

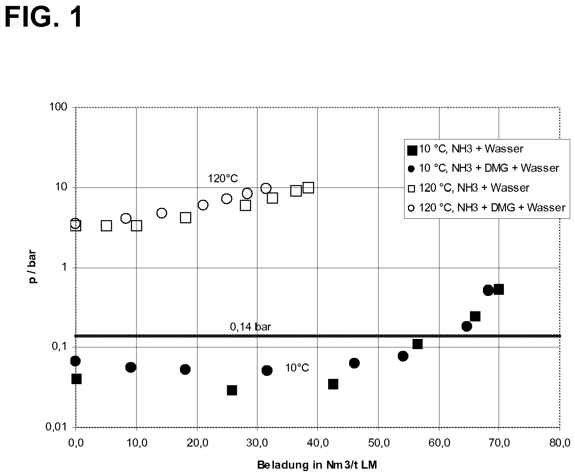

In gleicher Weise wurde auch der Gesamtdruck einer 5,3 Gew.-%igen Ammoniaklösung in Abhängigkeit von der zugegebenen CO₂-Menge bei 120 °C bestimmt. Die Ergebnisse sind in Fig. 1 dargestellt (die Beladungen der wässrigen Lösung in Nm3/t Lösung wurde unter Vernachlässigung der Masse der Gasphase berechnet).

Die Gleichgewichtsbeladung (maximale Beladbarkeit) der Ammoniaklösung mit CO₂ bei 0,14 bar und 10 °C) kann als Schnittpunkt der Druck-Beladungskurve (10 °C) mit der Gerade p = 0,14 bar ermittelt werden (etwa 64 Nm³/t). Für die Regeneration ergibt sich die Gleichgewichtsbeladung (Restbeladung des regenerierten Absorptionsmittels) als Schnittpunkt der Druck-Beladungskurve (120 °C) mit der Gerade p = 10 bar (etwa 38,5 Nm³/t). Aus der Differenz der beiden Beladungen ergibt sich eine Kreislaufkapazität von 25,5 Nm³/t.

### Beispiel 2: CO₂-Aufnahmekapazität einer wässrigen Ammoniaklösung mit Dimethylglycin

In gleicher Weise wie vorstehend beschrieben wurde für eine wässrige Lösung von 5 Gew.-% Ammoniak und 30 Gew.-% Dimethylglycin der Gesamtdruck über der Lösung bei 10 °C und 120 °C) bestimmt und Druck-Beladungskurven erstellt (Fig. 1). Die Auswertung liefert eine maximale Beladbarkeit bei 0,14 bar und 10 °C von etwa 64 Nm³/t. Unter den Bedingungen im Desorber ergibt sich eine Gleichgewichtsbeladung von 32,8 Nm³/t. Die Kreislaufkapazität für diese Absorptionsmittel beträgt somit 31,2 Nm³/t.

Der Vergleich zwischen den beiden Beispielen zeigt, dass durch Zugabe von Dimethylglycin zur Ammoniaklösung die Kreislaufkapazität um den Faktor 1,22 erhöht wird. Eine große Kapazität bedeutet, dass weniger Lösungsmittel im Kreis gefahren werden muss und damit die Apparate wie z. B. Pumpen, Wärmetauscher aber auch die Rohrleitungen kleiner dimensioniert werden können. Im vorliegenden Beispiel könnte die Umlaufmenge um etwa 18 % reduziert werden.

## Patentansprüche

1. Verfahren zum Entfernen von Kohlendioxid aus einem Fluidstrom, bei dem man
a) den Fluidstrom mit einem Absorptionsmittel in Kontakt bringt, das eine Lösung von Ammoniak und wenigstens einer Aminocarbonsäure und/oder Aminosulfonsäure enthält, wobei das Absorptionsmittel eine Ammoniak-Konzentration von 1 bis 12 mol/l und ein molares Verhältnis von Ammoniak : Aminocarbonsäure und/oder Aminosulfonsäure von 0,5 bis 6 aufweist, wobei man ein beladenes Absorptionsmittel erhält, und
b) das beladene Absorptionsmittel unter Freisetzen von Kohlendioxid bei einem Druck von 5 bis 50 bar (absoluter Druck) regeneriert.

2. Verfahren nach Anspruch 1, wobei man den Fluidstrom vor dem Inkontaktbringen mit dem Absorptionsmittel abkühlt.

3. Verfahren nach Anspruch 2, wobei man den Fluidstrom auf eine Temperatur von 0 bis 20 °C abkühlt.

4. Verfahren nach einem der vorhergehenden Ansprüche, wobei man den Fluidstrom mit dem Absorptionsmittel bei einer Temperatur von 0 bis 20 °C in Kontakt bringt.

5. Verfahren nach einem der vorhergehenden Ansprüche, wobei man den Fluidstrom mit dem Absorptionsmittel bei einem Druck von 0,9 bis 3 bar (absoluter Druck) in Kontakt bringt.

6. Verfahren nach einem der vorhergehenden Ansprüche, wobei man das beladene Absorptionsmittel bei einer Temperatur von 50 bis 200 °C regeneriert.

7. Verfahren nach einem der vorhergehenden Ansprüche, wobei das regenerierte Absorptionsmittel ein molares Verhältnis von Ammoniak : Kohlendioxid von mehr als 1,5 aufweist.

8. Verfahren nach einem der vorhergehenden Ansprüche, wobei das beladene Absorptionsmittel ein molares Verhältnis von Ammoniak : Kohlendioxid von 1,0 bis 2,0 aufweist.

9. Verfahren nach einem der vorhergehenden Ansprüche, wobei die Aminocarbonsäure eine α-Aminosäure oder eine β-Aminosäure ist.

10. Verfahren nach einem der vorhergehenden Ansprüche, wobei die Aminocarbonsäure unter N-Mono-C₁-C₄-alkyl-aminocarbonsäuren und N,N-Di-C₁-C₄-alkylaminocarbonsäuren ausgewählt ist.

11. Verfahren nach einem der vorhergehenden Ansprüche, wobei es sich bei der Aminocarbonsäure um 2-Aminoessigsäure, 2-Aminopropionsäure, N-Methylalanin, N-Methylglycin, 2-Aminoisobuttersäure, Piperidin-4-carbonsäure, Piperidin-3-carbonsäure, Piperidin-2-carbonsäure, 2-Amino-3-methyl-buttersäure, 2-Amino-4-methyl-pentansäure, 2-Amino-3-methyl-pentansäure, N-Methylaminoisobuttersäure, β-Aminobuttersäure, 3-Aminopropionsäure, 2-Amino-4-methylsulfanyl-butansäure, 2-Aminoethansulfonsäure und/oder 2-(Methylamino)ethansulfonsäure handelt.

12. Verfahren nach einem der vorhergehenden Ansprüche, wobei es sich bei dem Fluidstrom um ein Verbrennungsabgas handelt.

## Claims

1. A process for removing carbon dioxide from a fluid stream, in which
a) the fluid stream is contacted with an absorbent which comprises a solution of ammonia and at least one aminocarboxylic acid and/or aminosulfonic acid, wherein the absorbent has an ammonia concentration of from 1 to 12 mol/l a molar ratio of ammonia:aminocarboxylic acid and/or aminosulfonic acid of from 0.5 to 6, to obtain a laden absorbent, and
b) the laden absorbent is regenerated with release of carbon dioxide at a pressure of from 5 to 50 bar (absolute pressure).

2. The process according to claim 1, wherein the fluid stream is cooled before being contacted with the absorbent.

3. The process according to claim 2, wherein the fluid stream is cooled to a temperature of from 0 to 20°C.

4. The process according to any one of the preceding claims, wherein the fluid stream is contacted with the absorbent at a temperature of from 0 to 20°C.

5. The process according to any one of the preceding claims, wherein the fluid stream is contacted with the absorbent at a pressure of from 0.9 to 3 bar (absolute pressure).

6. The process according to any one of the preceding claims, wherein the laden absorbent is regenerated at a temperature of from 50 to 200°C.

7. The process according to any one of the preceding claims, wherein the regenerated absorbent has a molar ratio of ammonia:carbon dioxide of more than 1.5.

8. The process according to any one of the preceding claims, wherein the laden absorbent has a molar ratio of ammonia:carbon dioxide of from 1.0 to 2.0.

9. The process according to any one of the preceding claims, wherein the aminocarboxylic acid is an α-amino acid or a β-amino acid.

10. The process according to any one of the preceding claims, wherein the aminocarboxylic acid is selected from N-mono-C₁-C₄-alkylaminocarboxylic acids and N,N-di-C₁-C₄-alkylaminocarboxylic acids.

11. The process according to any one of the preceding claims, wherein the aminocarboxylic acid is 2-aminoacetic acid, 2-aminopropionic acid, N-methylalanine, N-methylglycine, 2-aminoisobutyric acid, piperidine-4-carboxylic acid, piperidine-3-carboxylic acid, piperidine-2-carboxylic acid, 2-amino-3-methylbutyric acid, 2-amino-4-methylpentanoic acid, 2-amino-3-methylpentanoic acid, N-methylaminoisobutyric acid, β-aminobutyric acid, 3-aminopropionic acid, 2-amino-4-methylsulfanylbutanoic acid, 2-aminoethanesulfonic acid and/or 2-(methylamino)ethanesulfonic acid.

12. The process according to any one of the preceding claims, wherein the fluid stream is a combustion offgas.

## Revendications

1. Procédé d'élimination de dioxyde de carbone d'un courant fluide, selon lequel
a) le courant fluide est mis en contact avec un agent d'absorption qui contient une solution d'ammoniac et d'au moins un acide aminocarboxylique et/ou un acide aminosulfonique, l'agent d'absorption présentant une concentration en ammoniac de 1 à 12 mol/l et un rapport molaire ammoniac:acide aminocarboxylique et/ou acide aminosulfonique de 0,5 à 6, un agent d'absorption chargé étant obtenu, et
b) l'agent d'absorption chargé est régénéré avec libération de dioxyde de carbone à une pression de 5 à 50 bar (pression absolue).

2. Procédé selon la revendication 1, dans lequel le courant fluide est refroidi avant la mise en contact avec l'agent d'absorption.

3. Procédé selon la revendication 2, dans lequel le courant fluide est refroidi à une température de 0 à 20 °C.

4. Procédé selon l'une quelconque des revendications précédentes, dans lequel le courant fluide est mis en contact avec l'agent d'absorption à une température de 0 à 20 °C.

5. Procédé selon l'une quelconque des revendications précédentes, dans lequel le courant fluide est mis en contact avec l'agent d'absorption à une pression de 0,9 à 3 bar (pression absolue).

6. Procédé selon l'une quelconque des revendications précédentes, dans lequel l'agent d'absorption chargé est régénéré à une température de 50 à 200 °C.

7. Procédé selon l'une quelconque des revendications précédentes, dans lequel l'agent d'absorption régénéré présente un rapport molaire ammoniac:dioxyde de carbone de plus de 1,5.

8. Procédé selon l'une quelconque des revendications précédentes, dans lequel l'agent d'absorption chargé présente un rapport molaire ammoniac:dioxyde de carbone de plus de 1,0 à 2,0.

9. Procédé selon l'une quelconque des revendications précédentes, dans lequel l'acide aminocarboxylique est un acide aminé α ou un acide aminé β.

10. Procédé selon l'une quelconque des revendications précédentes, dans lequel l'acide aminocarboxylique est choisi parmi les acides N-mono-alkyle en C₁-C₄-aminocarboxyliques et les acides N,N-di-alkyle en C₁-C₄-aminocarboxyliques.

11. Procédé selon l'une quelconque des revendications précédentes, dans lequel l'acide aminocarboxylique est l'acide 2-aminoacétique, l'acide 2-aminopropionique, la N-méthylalanine, la N-méthylglycine, l'acide 2-aminoisobutyrique, l'acide pipéridine-4-carboxylique, l'acide pipéridine-3-carboxylique, l'acide pipéridine-2-carboxylique, l'acide 2-amino-3-méthyl-butyrique, l'acide 2-amino-4-méthyl-pentanoïque, l'acide 2-amino-3-méthyl-pentanoïque, l'acide N-méthylaminoisobutyrique, l'acide β-aminobutyrique, l'acide 3-aminopropionique, l'acide 2-amino-4-méthylsulfanyl-butanoïque, l'acide 2-aminoéthane-sulfonique et/ou l'acide 2-(méthylamino)éthane-sulfonique.

12. Procédé selon l'une quelconque des revendications précédentes, dans lequel le courant fluide est un gaz d'échappement de combustion.
